# EUROPÄISCHE PATENTSCHRIFT

(11) **EP 1 959 124 B1**
(45) Veröffentlichungstag und Bekanntmachung des Hinweises auf die Patenterteilung: **14.06.2017**
(21) Anmeldenummer: 07021964.7
(22) Anmeldetag: 13.11.2007
(51) Int. Cl.: F02K 9/90, B64C 9/38, F42B 10/66

(54) **Vorrichtung zur Steuerung der Düsenschubrichtung eines Raketentriebwerks**
Device for controlling the nozzle thrust direction of a rocket engine
Dispositif destiné à la commande de la direction de poussée de tuyère d'un moteur-fusée

(30) Priorität: 15.02.2007 DE 102007007568
(43) Veröffentlichungstag der Anmeldung: 20.08.2008
(73) Patentinhaber: Bayern-Chemie Gesellschaft für flugchemische Antriebe mbH, 84544 Aschau a. Inn (DE)
(72) Erfinder: Naumann, Karl Wieland, Dr., 84454 Mühldorf/Inn (DE); Helzer, Walter, 85630 Grasbrunn (DE); Stierle, Ralf, 83533 Edling (DE); Schlöglmann, Kurt, 81547 München (DE)
(74) Vertreter: LS-MP von Puttkamer Berngruber Loth Spuhler

(56) Entgegenhaltungen:
- JP-A- H05 256 197
- JP-A- H10 238 409
- JP-K1- H05 256 197
- US-A- 3 096 049
- US-A- 4 274 610
- US-A- 5 398 887
- US-A- 5 511 745

## Beschreibung

Die Erfindung bezieht sich auf eine Vorrichtung zur Steuerung der Schubrichtung der Düse des Raketentriebwerks eines Flugkörpers.

Zur Beeinflussung der Schubrichtung einer Überschalldüse ist es bekannt, Strahlruder, schwenkbare Düsen, in den Abgasstrahl einschwenkbare Strahlspoiler, aus der Innenwand des divergenten Abschnitts der Düse austretende Gas- oder Flüssigkeitsstrahlen sowie mehrere Triebwerke zu verwenden, die in verschiedene Richtungen ausblasende oder asymmetrische Düsen aufweisen, deren Querschubkomponenten sich gegenseitig neutralisieren, sodass sich durch das Abschalten oder Drosseln einzelner Triebwerke ein resultierende Querschub ergibt.

Aus der JP H05 256197 A ist eine Vorrichtung zur Steuerung der Schubrichtung einer Düse eines Raketentriebwerks eines Flugkörpers bekannt, wobei die Vorrichtung Platten aufweist, die als einzige Elemente die Steuerung der Schubrichtung ermöglichen.

In dem Patentdokument US 5 398 887 wird ein Verfahren beschrieben, wie durch Klappen die äußere Strömung eines Fluggerätes beeinflusst werden kann.

Während bei typischen Feststofftriebwerken extrem heiße, dichte und gegebenenfalls partikelbeladene Abgasstrahlen schon nach einigen Sekunden zur Abstumpfung der Vorderkante der Strahlruder führen, was eine Erhöhung des Widerstands der Strahlruder und eine Verminderung des effektiven spezifischen Impulses des Antriebs zur Folge hat, bereitet die bewegliche Lagerung und deren Dichtung bei verschwenkbaren Düsen erhebliche Probleme. Auf das Lager wirken große Kräfte ein, die abgefangen werden müssen. Auch sind die gebräuchlichen Gummi-Metall-Schichtlager nur bei großen Düsen einsetzbar, nicht aber miniaturisierbar und erfordern eine in den Brennraum eintauchende Düse. Bei Strahlspoilern stellt der erhebliche Widerstand einen wesentlichen Nachteil dar. Zudem weisen sie eine geringe Standfestigkeit bei einem sehr heißen, dichten, gegebenenfalls partikelbeladenen Abgasstrahl auf.

Für aus der Innenwand des divergenten Abschnitts der Düse austretende Gas- oder Flüssigkeitsstrahlen ist entweder eine separate Gas- bzw. Flüssigkeitsversorgung notwendig, oder es müssen Ventile und Leitungen eingesetzt werden, welche den hohen Temperaturen des der Brennkammer entnommenen Abgases standhalten. Demgegenüber erfordern mehreren abschaltbare Triebwerke mit in verschiedenen Richtungen ausblasenden oder asymmetrischen Düsen bei Feststoffantrieben mit einem extrem heißen, dichten und gegebenenfalls partikelbeladenen Abgasstrahl sehr aufwändige Stellglieder, insbesondere bei Triebwerken mit hohem Schub.

Aufgabe der Erfindung ist es, eine Vorrichtung zur Steuerung der Schubrichtung einer Überschalldüse bereitzustellen, die weitgehend verlustfrei arbeitet und auch bei einem extrem heißen, dichten und partikelbeladenen Abgasstrahl eine hohe Standzeit besitzt.

Dies wird erfindungsgemäß mit der im Anspruch 1 gekennzeichneten Vorrichtung zur Schubvektorsteuerung erreicht. In den Unteransprüchen sind vorteilhafte Ausgestaltungen der Erfindung wiedergegeben.

Nach der Erfindung sind zur Steuerung der Schubrichtung einer Raketenschubdüse Steuerflächen vorgesehen, die in den Abgasstrahl in der Düse hinein bewegbar sind.

Auch ist es möglich, die Steuerflächen nach außen aus dem Abgasstrahl zu bewegen. Dies trägt jedoch nur dann zu einer Querkraft bei, wenn die Machzahl des Abgasstrahles gering ist.

Die Steuerflächen können verschiebbar ausgebildet sein, beispielsweise durch Lagerung in einer Kulisse. Vorzugsweise sind sie jedoch an der Düse um eine in Querrichtung verlaufende Schwenkachse verschwenkbar angelenkt.

Die Anzahl der Steuerflächen kann drei oder mehr betragen. Die Einschwenkwinkel der Steuerflächen sowie gegebenenfalls die Kombination mehrerer eingeschwenkter Steuerflächen definieren den zu erreichenden Schubvektor.

Die Steuerflächen stellen einen Bestandteil des divergenten Abschnitts der Düse dar. Das heißt, sie werden durch einschwenkbare Segmente des divergierenden Düsenabschnitts gebildet. Wird die Schubvektorsteuerung nicht genutzt, stehen die Segmente in der Ruheposition, d. h. sie fluchten mit dem divergenten Mantel der Düse. In der Ruheposition arbeitet die Düse verlustfrei, also ohne dass ihr Wirkungsgrad beeinträchtigt wird.

Der restliche Teil des divergenten Düsenabschnitts wird durch Stege zwischen den einschwenkbaren Segmenten gebildet. Die Stege sind analog zur neutralen Düsengeometrie ausgeführt.

Zur Verschwenkung der Steuerflächen können beispielsweise elektromechanische Aktuatoren vorgesehen sein. Damit der Spalt an der vorderen Kante der Steuerflächen eng ausgebildet ist, ist die Schwenkachse vorzugsweise im Bereich der vorderen Kanten der Steuerflächen vorgesehen. Dieser Spalt kann zudem weiter abgedichtet werden, beispielsweise durch eine die gegenüberliegende Kante der Düse übergreifende vordere Kante der Steuerfläche. Die Spalte an den Längskanten der eingeschwenkten Steuerflächen können beispielsweise durch von beiden Längskanten jeder Steuerfläche nach außen etwa senkrecht stehende Dichtflächen abgedichtet sein. In der Regel können diese Längsspalten jedoch offen bleiben, sofern in der Umgebung der Düse keine temperaturempfindlichen Teile, wie Kabel, vorgesehen sind, die durch durch die Längsspalte austretendes Abgas beschädigt werden können.

Die Steuerflächen weisen vorzugsweise eine ihre tragende Struktur vor dem heißen Abgasstrahl schützende Schutzschicht auf, die die Innenseite der tragenden Struktur und den Randbereich der Steuerflächen bedeckt. Die Schutzschicht besteht vorzugsweise aus einer sich verzehrenden, abladierenden Wärmeisolation, kann jedoch auch durch eine nicht verzehrende, thermische Isolation, z. B. auf Siliziumcarbid-Basis gebildet sein. Außer der tragenden Struktur der Steuerflächen können auch andere Teile, insbesondere krafttragende Teile, wie Gelenke, mit einer solchen Schutzschicht versehen sein.

Um den Flugkörper in Rollbewegung zu versetzen, sind an der Düse verschwenkbar angelenkte, Drall erzeugende Flächen vorgesehen. Dabei ist für jede Rollrichtung vorzugsweise jeweils ein Paar gegenüberliegender Drall erzeugender Flächen vorgesehen.

Die Drall erzeugenden Flächen sind um eine z. B. schräg zur Abgasströmungsrichtung und Mantellinie des divergierenden Düsenabschnitts verlaufende Schwenkachse verschwenkbar. Der Winkel dieser Schwenkachse zur Abgasströmungsrichtung bzw. Mantellinie des divergierenden Düsenabschnitts kann beispielsweise 30 bis 60° betragen. Die Drall erzeugenden Flächen können sich auch an die hintere Kante der Düse anschließen.

Die Erfindung ist insbesondere für Flugkörper mit aerodynamischen Rudern bestimmt. Vorzugsweise ist dann die Ansteuerung der Steuerflächen mit der Ansteuerung der aerodynamischen Ruder gekoppelt. Nach einer bevorzugten Ausführungsform ist die Koppelung dieser Ansteuerung derart nicht linear oder nicht proportional ausgeführt, dass bei geringem Steuerungsbedarf nur die aerodynamischen Ruder angesteuert werden, und erst bei Überschreiten eines vorgegebenen Mindestausschlags der aerodynamischen Ruder die Steuerflächen. Damit kann die Querschub erzeugende Aktion der Steuerflächen, die in der in den Abgasstrahl eingeschwenkten Position nicht nur zu einer Herabsetzung des Düsenwirkungsgrades führen, sondern durch den auf sie auftreffenden Abgasstrahl auch einem erhöhten Verschleiß unterliegen, auf kurze Zeitspannen von wenigen Sekunden begrenzt werden, während der große Steuerkräfte erzeugt werden müssen. Aus dem gleichen Grunde kann der Ausschlag der Steuerflächen exponentiell mit dem Ausschlag der aerodynamischen Ruder ansteigen. D.h. der Ausschlag der Steuerflächen nimmt bei geringem Ausschlag der Ruder nur langsam zu, wird jedoch mit steigendem Ausschlag der Ruder zunehmend größer.

Die Steuerflächen können auch um mehrere Achsen verschwenkbar an der Düse angelenkt sein, beispielsweise mit einem Universalgelenk. Durch eine gegebenenfalls überlagerte Kippbewegung der Steuerflächen kann damit ein resultierender Kraftbeitrag zur Erzeugung einer Drall- oder Rollbeschleunigung oder Rollverzögerung erzeugt werden, wobei ein geringer Kraftbeitrag wegen des im allgemeinen geringen Trägheitsmoments um die Rollachse ausreicht. Aus diesem Grunde weisen auch die Drall erzeugenden Flächen üblicherweise eine kleinere Fläche als die Steuerflächen auf. Nach einer Ausführungsform, die nicht Teil der Erfindung ist, können die Steuerflächen auch innerhalb einer Düse angeordnet sein, die einen geschlossenen divergenten Abschnitt aufweist. Diese Ausführungsform hat gegenüber Steuerflächen, die durch Segmente des divergenten Düsenabschnitts gebildet werden, den Vorteil, dass bei Betätigung der Steuerflächen keine Spalte in der Düse erzeugt werden. Allerdings kann bei dieser Ausführungsform eine aufwändigere Ansteuerung erforderlich sein, da diese durch den geschlossenen divergenten Düsenabschnitt hindurch geführt werden muss. Nach einer Ausführungsform, die nicht Teil der Erfindung ist, können die Steuerflächen auch durch Schlitze in dem divergenten Düsenabschnitt in den Abgasstrahl in der Düse geschoben werden. Die Verschiebung kann dabei parallel zur Düsenlängsachse erfolgen oder beispielsweise mit gewölbten Steuerflächen und einer entsprechenden Kulissenführung auf einer gekrümmten Bahn. Dies kann beispielsweise bei beengten Platzverhältnissen vorteilhaft sein. Auch ist bei beengten Platzverhältnissen eine Kombination von Dreh- und Schiebebewegung der Steuerflächen möglich.

Die erfindungsgemäße Steuerungsvorrichtung kann auch bei Düsen eingesetzt werden, die keinen runden Querschnitt besitzen.

Die erfindungsgemäße Steuervorrichtung weist den Vorteil auf, dass sie, falls sie nicht zur Steuerung herangezogen wird, den Düsenwirkungsgrad nicht beeinträchtigt. Auch tritt nur eine minimale Beeinträchtigung des Düsenwirkungsgrades auf, falls kleine Querkraftkomponenten benötigt werden. Die erfindungsgemäße Vorrichtung ist daher besonders geeignet für Raketenmotore mit langer Brenndauer.

Da die Steuerflächen Bestandteil des divergenten Düsenabschnitts sind, wird die Masse des Triebwerks praktisch nicht erhöht. Gleiches gilt für Triebwerkabmessungen. Zudem wird eine hohe Standzeit auch bei einem extrem heißen, dichten und gegebenenfalls partikelbeladenen Abgasstrahl erreicht, weil nur die abladierenden Schutzschichten der Steuerflächen thermisch beaufschlagt werden, wobei sie nur kurzzeitig während der Phase der Querkrafterzeugung einer erhöhten thermischen Belastung ausgesetzt sind. Auch kann nach der Erfindung die Lagerung der Steuerflächen derart angeordnet werden, dass die Lager und die Last aufnehmenden Elemente keiner nennenswerten thermischen Belastung ausgesetzt werden. Alle Funktionen können dabei getrennt und eindeutig bestimmten Komponenten und Bauteilen zugeordnet werden, beispielsweise Lagerung, thermische Isolierung, Kraftübertragung, Wärmeabsorption, usw.

Nachstehend ist die erfindungsgemäße Steuervorrichtung anhand der beigefügten Zeichnung beispielhaft näher erläutert. Darin zeigen jeweils schematisch:
Figur 1 eine perspektivische Ansicht der Düse eines Raketentriebwerks;
Figur 2 einen Längsschnitt der Düse nach Figur 1 mit der die aerodynamischen Ruder tragenden Heckstruktur;
Figur 3 eine perspektivische Ansicht der Düse, wobei die einschwenkbaren Segmente weggelassen und nur zwei Drall erzeugende Flächen dargestellt sind; und
Figur 4 einen Längsschnitt durch die obere Hälfte einer Düse nach einer anderen Ausführungsform, die nicht Teil der Erfindung ist.

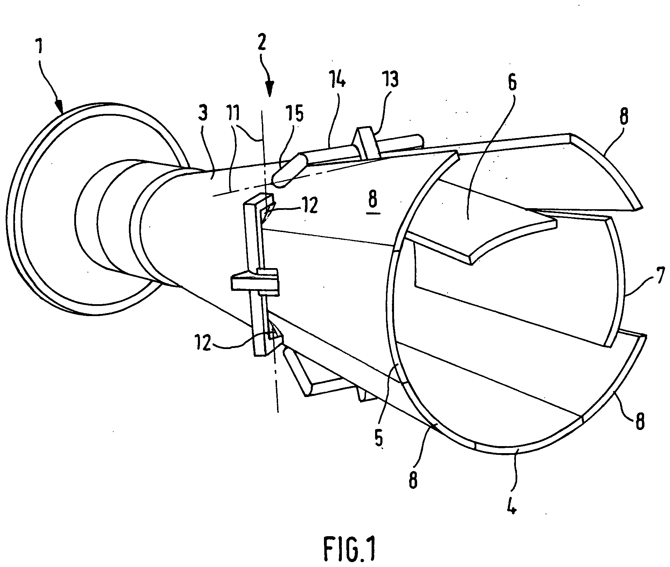

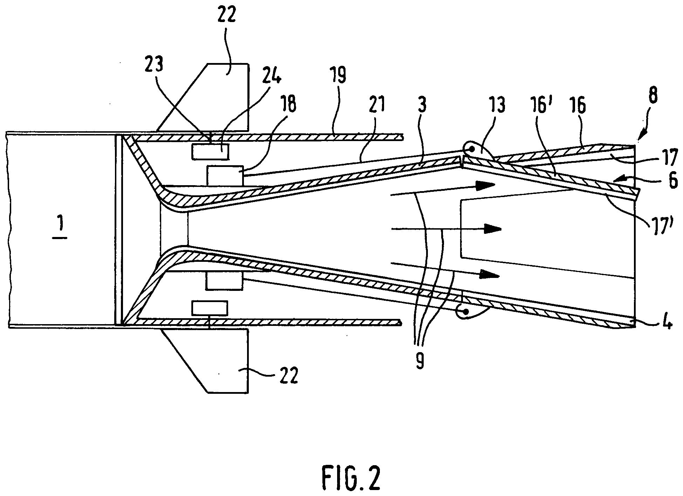

Gemäß Figur 1 und 2 schließt sich an die Brennkammer 1 eines Raketentriebwerks die Schubdüse 2 an, die einen divergenten Abschnitt 3 aufweist. Der hintere Teil des divergenten Düsenabschnitts 3 besteht aus vier Segmenten 4 bis 7 und vier Längsstegen 8, die jeweils zwischen zwei Segmenten 4 bis 7 angeordnet sind.

Die Stege 8 sind starr und einteilig mit dem divergenten Düsenabschnitt 3 ausgebildet. Demgegenüber bilden die Segmente 4 bis 7 Steuerflächen zur Schubvektorsteuerung des Raketentriebwerks. Dazu sind die Segmente bzw. Steuerflächen 4 bis 7 von ihrer Ruheposition, in der sie, wie durch die Segmente 4 und 5 dargestellt, sowohl mit der Außenseite wie der Innenseite des divergenten Düsenabschnitts 3 fluchten, in den durch die Pfeile 9 dargestellten Abgasstrahl in der Düse 2 einschwenkbar, wie durch die Segmente 6 und 7 dargestellt.

Die Segmente 4 bis 7 sind um quer zu diesen Längsachsen verlaufende Schwenkachsen 11, die am vorderen Ende der Segmente 4 bis 7 angeordnet sind, an dem divergenten Düsenabschnitt 3 verschwenkbar gelagert und zwar an Lagerböcken 12, die beiderseits jedes Segments 4 bis 7 an den benachbarten Längsstegen 8 angeordnet sind.

Die Segmente 4 bis 7 sind zu ihrer Lagerung jeweils mit einem nach außen ragenden Vorsprung 13 an ihrem vorderen Ende versehen. Von den beiden Lagerböcken 12 beiderseits jedes Segments 4 bis 7 erstrecken sich Hebelarme 15, die über eine Querstange 14 an dem jeweiligen Segment 4 bis 7 befestigt sind.

Wie üblich, weist die Düse 1 eine tragende Struktur auf, die an ihrer Innenseite mit einer Schutzschicht versehen ist, um sie vor dem heißen Abgasstrahl zu schützen. Demgemäß sind auch die einstückig auf dem divergenten Düsenabschnitt 3 gebildeten Längsstege aus der tragenden Struktur 16 und der Schutzschicht 17 des divergenten Düsenabschnitts 3 gebildet. In gleicher Weise bestehen die Segmente 4 bis 7 aus einer tragenden Struktur 16', die an ihrer Innenseite mit einer Schutzschicht 17' versehen ist (Fig. 2).

Da die Segmente 4 bis 7 nach dem Einschwenken, wie durch die eingeschwenkten Segmente 6 und 7 verdeutlicht, auch im Randbereich dem heißen Abgasstrahl ausgesetzt sind, und auch der Randbereich der Stege 8 von dem heißen Abgas beaufschlagt wird, das aus dem Spalt zwischen den eingeschwenkten Segmenten 6, 7 und den Längsstegen 8 austritt, erstreckt sich die Schutzschicht 17' an den Segmenten 4 bis 7 und die Schutzschicht 17 an den Stegen 8 auch über den Randbereich der Segmente 4 bis 7 bzw. der Stege 8 (Fig. 1).

Zur Betätigung der Segmente 4 bis 7 ist ein beispielsweise elektromotorischer Aktuator 18 in der Heckstruktur 19 vorgesehen, die sich von der Kammer 1 über den vorderen Teil der Düse 2 erstreckt. Der Aktuator 18 ist über eine Koppelstange 21 mit dem Vorsprung 13 an den Segmenten 4 bis 7 gelenkig verbunden.

An der Heckstruktur 19 sind ferner aerodynamische Ruder 22 um eine quer zur Düsenlängsachse verlaufende Achse 23 verschwenkbar gelagert, die beispielsweise durch elektromotorische Aktuatoren 24 betätigt werden.

Die Ansteuerung der durch die Segmente 4 bis 7 gebildeten Steuerflächen ist mit der Ansteuerung der aerodynamischen Ruder 22 derart gekoppelt, dass die Segmente 4 bis 7 von den Aktuatoren 18 erst betätigt werden, wenn die aerodynamischen Ruder 22, betätigt durch die Aktuatoren 24, einen vorgegebenen Mindestausschlag zur Flugkörperlängsachse eingenommen haben. Es ist auch eine gemeinsame Ansteuerung der aerodynamischen Ruder und der Segmente mittels eines gemeinsamen Aktuators und eines Gestänges möglich.

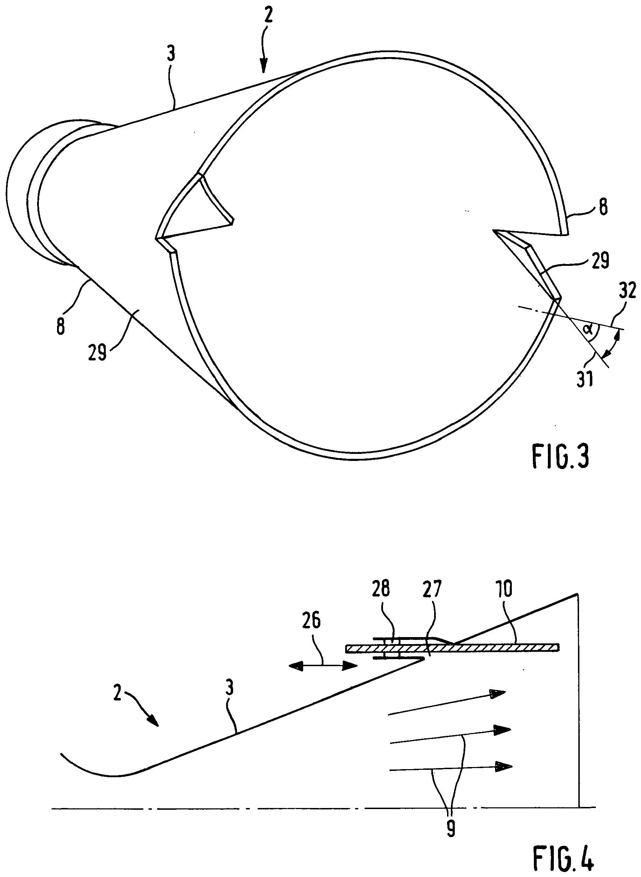

Während bei der Ausführungsform nach Figur 1 und 2 die die Steuerflächen bildenden Segmente 4 bis 7 einen Bestandteil des divergenten Düsenabschnitts 3 bilden, sind nach der Ausführungsform nach Figur 4 die Steuerflächen 10 in den Abgasstrahl 9 in dem divergenten Düsenabschnitt 3 gemäß dem Doppelpfeil 26 verschiebbar. Dazu sind in dem divergenten Düsenabschnitt 3 Querschlitze 27 vorgesehen und außen an dem Düsenabschnitt 3 im Bereich der Querschlitze 27 jeweils eine Führung 28 für die betreffende verschiebbare Steuerfläche 10. Die Ausführungsform nach Figur 4 ist allerdings nicht Teil der Erfindung. Wenn eine gekrümmte Kulissenführung vorgesehen ist, können die Steuerflächen 10 auch in den Abgasstrahl 9 hinein gekrümmt ausgebildet sein. Auch ist es möglich, den hinteren Teil der Steuerfläche 10 verschiebbar und den vorderen Teil zusätzlich in den Abgasstrahl 9 hinein verschwenkbar auszubilden.

Zur Rollbewegung des Flugkörpers sind gemäß Figur 3 an dem divergenten Düsenabschnitt 3 in den Abgasstrahl 9 verschwenkbare Drall erzeugende Flächen 29 vorgesehen. Dabei ist für jede Rollrichtung, wie in Figur 3 dargestellt, jeweils ein Paar gegenüberliegender Drall erzeugender Flächen 29 vorgesehen. Die Schwenkachse 31 der Drall erzeugenden Flächen 29 verläuft in einem Winkel □ von beispielsweise 45° zu der Mantellinie 32 des divergenten Düsenabschnitts 3. Die Drall erzeugenden Flächen 29 sind an dem hinteren Ende der Längsstege 8 angeordnet, sodass sie, wenn sie aus der in Figur 3 dargestellten eingeschwenkten Position in die Ruheposition zurück geschwenkt sind, mit ihrer hinteren Kante mit der hinteren Kante der Düse 2 fluchten.

## Patentansprüche

1. Vorrichtung zur Steuerung der Schubrichtung der Düse des Raketentriebwerks eines Flugkörpers, wobei die Düse (2) einen divergenten Abschnitt (3) aufweist, der Stege (8) und Steuerflächen (4 bis 7) aufweist, wobei die Steuerflächen (4 bis 7) in oder aus dem Abgasstrahl (9) in der Düse (2) bewegbar und verschwenkbar ausgebildet sind, wobei die Steuerflächen durch schwenkbare Segmente des divergenten Düsenabschnitts (3) gebildet sind, und der restliche Teil des divergenten Düsenabschnitts (3) im Bereich der Segmente (4 bis 7) durch die Stege (8) zwischen den Segmenten (4 bis 7) gebildet wird, **dadurch gekennzeichnet, dass** an dem divergenten Düsenabschnitt (3) verschwenkbare, Drall erzeugende Flächen (29) vorgesehen sind, wobei die Drall erzeugenden Flächen (29) um eine schräg zur Abgasströmung und zur Mantellinie (32) des divergenten Düsenabschnitts(3) verlaufende Schwenkachse (31) verschwenkbar sind, um den Flugkörper in Rollbewegung zu versetzen, dass für jede Rollrichtung jeweils ein Paar gegenüberliegender Drall erzeugender Flächen (29)vorgesehen ist, und dass die Drall erzeugenden Flächen (29) eine kleinere Fläche als die Steuerflächen (4 bis 7) aufweisen.

2. Vorrichtung nach Anspruch 1, **dadurch gekennzeichnet, dass** die Schwenkachsen (11) der Steuerflächen (4 bis 7) in Querrichtung verlaufen und im vorderen Endbereich der Steuerflächen (4 bis 7) angeordnet sind.

3. Vorrichtung nach Anspruch 1 oder 2, **dadurch gekennzeichnet, dass** die schwenkbaren Segmente (4 bis 7) an der Außenseite des divergenten Düsenabschnitts (3) gelagert sind.

4. Vorrichtung nach einem der vorstehenden Ansprüche, **dadurch gekennzeichnet, dass** die Steuerflächen (4 bis 7, 10) eine ihre tragende Struktur (16') vor dem heißen Abgasstrahl (9) schützende Schutzschicht (17') aufweisen.

5. Vorrichtung nach Anspruch 1, **dadurch gekennzeichnet, dass** die Drall erzeugenden Flächen (29) im hinteren Endbereich des divergenten Düsenabschnitts (3) angeordnet sind.

6. Vorrichtung nach Anspruch 1 sowie Anspruch 5, **dadurch gekennzeichnet, dass** die Drall erzeugenden Flächen (29) an den Stegen (8) verschwenkbar angelenkt sind.

7. Vorrichtung nach einem der vorstehenden Ansprüche, **dadurch gekennzeichnet, dass** der Flugkörper mit aerodynamischen Rudern (22) versehen ist, deren Ansteuerung mit der Ansteuerung der Steuerflächen (4 bis 7, 10) derart gekoppelt ist, dass die Steuerflächen (4 bis 7, 10) erst nach einem vorgegebenen Mindestausschlag der aerodynamischen Ruder (22) betätigt werden.

8. Vorrichtung nach einem der Ansprüche 1 bis 7, **dadurch gekennzeichnet, dass** der Flugkörper mit aerodynamischen Rudern (22) versehen ist, deren Ansteuerung mit der Ansteuerung der Steuerflächen (4 bis 7, 10) derart gekoppelt ist, dass der Ausschlag der Steuerflächen (4 bis 7, 10) exponentiell mit dem Ausschlag der aerodynamischen Ruder (22) ansteigt.

## Claims

1. Device for controlling the direction of thrust of the nozzle of the rocket propulsion unit of a missile, wherein the nozzle (2) has a divergent section (3) having fixed portions (8) and control surfaces (4 to 7), wherein the control surfaces (4 to 7) are configured such that they can be moved or swivelled into or out of the exhaust plume (9) in the nozzle (2), wherein the control surfaces are formed by means of swivel-mounted segments of the divergent nozzle section (3), and the remaining part of the divergent nozzle section (3) in the region of the segments (4 to 7) is formed by means of the fixed portions (8) between the segments (4 to 7), **characterized in that** swivel-mounted surfaces (29) generating an angular momentum are provided on the divergent nozzle section (3), wherein the surfaces (29) generating an angular momentum can be swivelled about a swivel axis (31) running at an angle to the direction of exhaust flow and to the surface line (32) of the divergent nozzle section (3) in order to set the missile in rolling motion, that a pair of opposite surfaces (29) generating an angular momentum is each provided for each rolling direction, and that the surfaces (29) generating an angular momentum have a smaller surface area than the control surfaces (4 to 7).

2. Device according to claim 1, **characterized in that** the swivel axes (11) of the control surfaces (4 to 7) run in the transverse direction and are arranged in the front end portion of the control surfaces (4 to 7).

3. Device according to claim 1 or 2, **characterized in that** swivel-mounted segments (4 to 7) are mounted on the outside of the divergent nozzle section (3).

4. Device according to any of the preceding claims, **characterized in that** the control surfaces (4 to 7, 10) have a protective layer (17') protecting their support structure (16') against the hot exhaust plume (9).

5. Device according to claim 1, **characterized in that** the surfaces (29) generating an angular momentum are arranged in the rear end portion of the divergent nozzle section (3).

6. Device according to claim 1 as well as claim 5, **characterized in that** the surfaces (29) generating an angular momentum are pivotally hinged to the fixed portions (8).

7. Device according to any of the preceding claims, **characterized in that** the missile is provided with aerodynamic rudders (22) the actuation of which is coupled with the actuation of the control surfaces (4 to 7, 10) in such a manner that the control surfaces (4 to 7, 10) are only actuated upon a predetermined minimum deflection of the aerodynamic rudders (22).

8. Device according to any of claims 1 to 7, **characterized in that** the missile is provided with aerodynamic rudders (22) the actuation of which is coupled with the actuation of the control surfaces (4 to 7, 10) in such a manner that the deflection of the control surfaces (4 to 7, 10) increases exponentially with the deflection of the aerodynamic rudders (22).

## Revendications

1. Dispositif pour la commande de la direction de poussée de la tuyère d'un propulseur de fusée d'un engin volant, la tuyère (2) présentant un tronçon divergent (3) qui présente des nervures (8) et des surfaces de commande (4 à 7), les surfaces de commande (4 à 7) étant réalisées mobiles et pivotantes dans la tuyère (2) dans ou hors du jet de gaz d'échappement (9), les surfaces de commandes étant formées par des segment pivotants du tronçon de tuyère divergent (3) et la partie restante du tronçon de tuyère divergent (3) étant formée dans la zone des segments (4 à 7) par les nervures (8) entre les segments (4 à 7), **caractérisé en ce que** sur le tronçon de tuyère divergent (3) sont prévues des surfaces pivotantes (29) produisant des tourbillonnements, les surfaces pivotantes (29) produisant des tourbillonnements pouvant pivoter autour d'un axe de pivotement (31) s'étendant en oblique par rapport à l'écoulement de gaz d'échappement et par rapport à la génératrice (32) du tronçon de tuyère divergent (3) pour mettre l'engin volant en mouvement de roulis, **en ce qu'**il est prévu pour chaque direction de roulis une paire respective de surfaces (29) produisant des tourbillonnements, et **en ce que** les surfaces (29) produisant des tourbillonnements présentent une plus petite surface que les surfaces de commande (4 à 7).

2. Dispositif selon la revendication 1, **caractérisé en ce que** les axes de pivotement (11) des surfaces de commande (4 à 7) s'étendent en direction transversale et sont agencés dans la zone terminale antérieure des surfaces de commande (4 à 7).

3. Dispositif selon la revendication 1 ou 2, **caractérisé en ce que** les segments pivotants (4 à 7) sont montés sur la face extérieure du tronçon de tuyère divergent (3).

4. Dispositif selon l'une des revendications précédentes, **caractérisé en ce que** les surfaces de commande (4 à 7, 10) présentent une couche de protection (17') protégeant leur structure portante (16') vis-à-vis du jet de gaz d'échappement (9) chaud.

5. Dispositif selon la revendication 1, **caractérisé en ce que** les surfaces (29) produisant des tourbillonnements sont agencées dans la zone terminale postérieure du tronçon de tuyère divergent (3).

6. Dispositif selon la revendication 1 ainsi que selon la revendication 5, **caractérisé en ce que** les surfaces (29) produisant des tourbillonnements sont articulées de manière pivotante sur les nervures (8).

7. Dispositif selon l'une des revendications précédentes, **caractérisé en ce que** l'engin volant est pourvu de gouvernes aérodynamiques (22) dont le pilotage est accouplé au pilotage des surfaces de commande (4 à 7, 10) de telle sorte que les surfaces de commande (4 à 7, 10) sont actionnées seulement après un débattement minimum des gouvernes aérodynamiques (22).

8. Dispositif selon l'une des revendications 1 à 7, **caractérisé en ce que** l'engin volant est pourvu de gouvernes aérodynamiques (22) dont le pilotage est accouplé au pilotage des surfaces de commande (4 à 7, 10) de telle sorte que le débattement des surfaces de commande (4 à 7, 10) augmente exponentiellement avec le débattement des gouvernes aérodynamiques (22).
